# EUROPEAN PATENT SPECIFICATION

(11) **EP 1 505 458 B1**
(45) Date of publication and mention of the grant of the patent: **02.08.2017**
(21) Application number: 04018627.2
(22) Date of filing: 05.08.2004
(51) Int. Cl.: G03G 21/16, G03G 21/18

(54) **Image forming apparatus**
Bildaufzeichnungsvorrichtung
Appareil de formation d'images

(30) Priority: 08.08.2003 JP 2003290005; 25.12.2003 JP 2003431628
(43) Date of publication of application: 09.02.2005
(73) Proprietor: CANON KABUSHIKI KAISHA, Tokyo (JP)
(72) Inventor: Kaiga, Miho, Tokyo (JP); Takagi, Takeshi, Tokyo (JP)
(74) Representative: TBK

(56) References cited:
- EP-A- 1 289 150
- JP-A- H 086 466
- JP-A- 2001 034 141
- US-A- 5 153 640
- US-A- 5 300 979
- US-A1- 2002 114 640
- US-A1- 2003 049 061
- US-B1- 6 473 576

## Description

### BACKGROUND OF THE INVENTION

### Field of the Invention

The present invention relates to an image forming apparatus according to the preamble of claim 1 and more particularly to an image forming apparatus of integrated type with an image forming portion and an image reading portion.

### Related Background Art

An image forming apparatus utilizing for example an electrophotographic method is conventionally provided with an image forming portion for charging an electrophotographic photosensitive member (photosensitive member) serving as an image bearing member, executing an exposure according to image information to form an electrostatic image on the photosensitive member, developing the electrostatic image with a developer (toner) to obtain a developer image (toner image), then transferring the toner image onto a recording material and fixing it thereby forming a recorded image. Also there is widely popular an image forming apparatus (integrated apparatus) which is not only provided with such image forming portion functioning as a printer for forming an image in response to an image information signal transmitted from an external equipment but also which is provided with an image reading portion for optically reading image information of an original to provide an electrical signal thereby functioning as a copying machine for forming an image in the image forming portion according to image information read in the image reading portion or as a scanning apparatus for transmitting the information read in the image reading portion to an external equipment such as a host computer connected communicably with the image forming apparatus.

Also in the image forming apparatus utilizing the electrophotographic method, there is employed a process cartridge system in which a photosensitive member and process means acting on such photosensitive member are integrally constructed in a cartridge and such cartridge is detachably mounted on a main body of the apparatus. Such process cartridge system allows to execute the maintenance of the apparatus not by a service personnel but by the user himself, thereby drastically improving the operability of the apparatus. For this reason, such process cartridge system is widely employed in the image forming apparatus. It is also known to construct a developing apparatus for developing the electrostatic image forming on the photosensitive member as an independent unit (developing cartridge) detachably mountable on the main body of the apparatus.

In a small-sized or medium-sized integrated apparatus provided for example with an image reading portion above an image forming portion and with a recording material discharging portion between the image forming portion and the image reading portion, there is required a configuration allowing to open the interior of the image forming portion at a trouble handling in the image forming portion or at a maintenance work such as cleaning of the interior or a replacement of consumable part (replacement part) such as the cartridge.

There is generally employed a system in which the image reading portion is made to slide in a translational movement (lateral direction) with respect to the image forming portion provided thereunder, thereby opening the interior of the image forming portion.

However, in case the image reading portion slides in a translational movement with respect to the image forming portion, it is necessary to provide rail members, bearings etc. for slidably supporting the heavy image reading portion, thereby resulting in an increase in the number of components. Also the parallel sliding of the image reading portion relative to the image forming portion increases the area occupied by the main body of the apparatus, thereby requiring a large footprint for installation.

For this reason, there is employed a system of securing a space between the image forming portion and the fixed image reading portion positioned above the image forming portion, and opening an upper cover member provided on the image forming portion thereby opening the interior of the image forming portion.

However, in order to enable access to the interior of the image forming portion by securing a space between the image forming portion and the fixed image reading portion positioned above the image forming portion, and opening the upper cover member provided on the image forming portion, it is necessary to form a sufficiently large aperture between the image forming portion and the image reading portion, whereby the height of the apparatus has to be increased, thereby resulting in drawbacks of an increased height of the copy board of the image reading portion, a deterioration in the operability and an increase in the dimension of the main body of the apparatus.

The JP-A-2001-034141 discloses a generic image forming apparatus having the features according to the preamble of claim 1.

Furthermore, the US-B1-6 473 576 discloses an image forming apparatus having a construction where the openable and closeable member is operatively connected to the image reading portion.

JP H08 6466 A discloses an image forming apparatus wherein an openable and closable member is operatively connected to the image reading portion via a link means so that a movement of said image reading portion causes a movement of said openable and closable member, said image reading portion and said openable and closable member are capable of rotational movement, and that said image reading portion and said openable and closable member have a same rotary center.

### SUMMARY OF THE INVENTION

It is the object of the invention to further develop the above generic image forming apparatus such that the replacement process of the process cartridge is improved.

This object is achieved by an image forming apparatus having the features of claim 1.

Advantageous further formations are subject of the dependent claims.

Still other objects of the present invention will become fully apparent from the following description.

### BRIEF DESCRIPTION OF THE DRAWINGS

Fig. 1 is a perspective view showing a state in which a scanner and a door are opened, in an image forming apparatus constituting a first embodiment of the present invention;
Fig. 2 is a cross-sectional view showing an internal structure of the image forming apparatus;
Fig. 3 is a cross-sectional view showing an open-closing link mechanism in a state where the scanner is closed;
Fig. 4 is a cross-sectional view showing the open-closing link mechanism in a state where the scanner is opened;
Fig. 5 is a perspective view of the image forming apparatus in a stationary state;
Fig. 6 is a cross-sectional view showing an image forming apparatus constituting a second embodiment of the present invention;
Fig. 7 is a perspective view showing an image forming apparatus constituting a third embodiment of the present invention;
Fig. 8 is a cross-sectional view showing the internal structure of the image forming apparatus;
Fig. 9 is a cross-sectional view showing a state where the scanner is closed;
Fig. 10 is a cross-sectional view showing a state, in an open-closing operation of the scanner and the door, where the scanner is popped up after unlocking;
Fig. 11 is a cross-sectional view showing a state, in an open-closing operation of the scanner and the door, where the scanner is opened;
Fig. 12 is a cross-sectional view showing a state, in an open-closing operation of the scanner and the door, where the scanner is opened;
Fig. 13 is a perspective view of an image forming apparatus in a stationary state; and
Fig. 14 is a cross-sectional view showing an image forming apparatus constituting a fourth embodiment of the present invention.

### DETAILED DESCRIPTION OF THE PREFERRED EMBODIMENTS

In the following, embodiments of the present invention will be explained with reference to accompanying drawings. In the drawings of following embodiments, same or equivalent portions are presented by a same number.

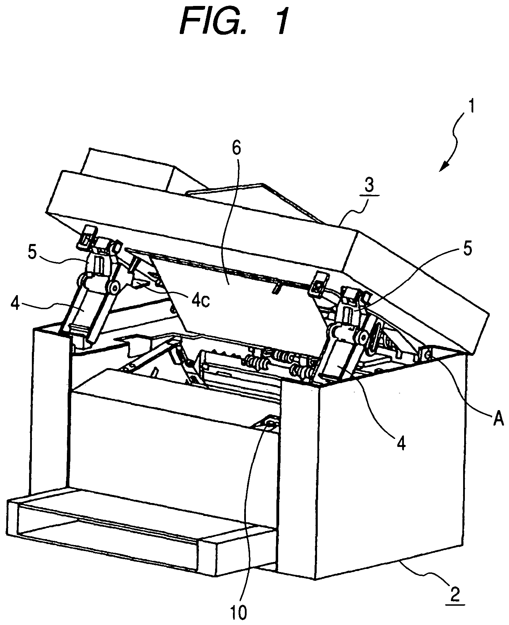

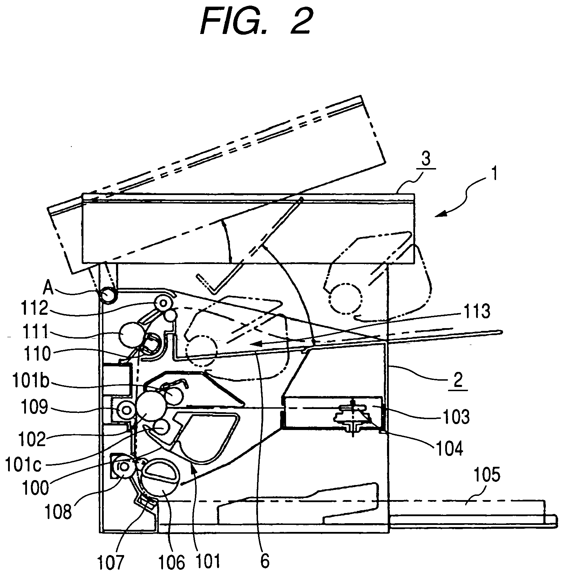

At first there will be explained an image forming apparatus constituting a first embodiment of the present invention. Fig. 1 shows a state, in an image forming apparatus having an image reading portion above an image forming portion (hereinafter called integrated apparatus) of the first embodiment, where a scanner 3 and a door (cartridge door) 6 constituting an open/closable member, and Fig. 2 is a schematic view showing the internal configuration of the printer.

As shown in Fig. 1, the integrated apparatus 1 is largely constituted of a printer 2 constituting an image forming portion, and a scanner 3 constituting an image reading portion. The scanner 3 is provided above the printer 2 in a state sandwiching a discharged sheet stacking portion 113 (cf. Fig. 2) constituting a recording material discharge portion.

Also the scanner 3 is movable with respect to the printer 2. More specifically, the scanner 3 is provided rotatably with respect to the printer 2, about a rotary center A in a rear portion. Also in a front portion, the printer 2 and the scanner 3 are linked by a pair of link members, provided at left and right, each constituted of a lower link 4 and an upper link 5.

In the following, internal structure of the printer 2 will be explained. As shown in Fig. 2, the printer 2 is a laser printer in which a process cartridge 101 provided with image forming means to form an image by an electrophotographic process and to record such image on a recording sheet (recording material).

The process cartridge 101 is provided, in a casing, with a rotatable photosensitive drum 102 serving as an image bearing member, charging means 101b and developing means 101c.

Also in a front portion (right side in Fig. 2) of the main body of the apparatus, there is provided a laser scanner unit 103 constituting light emitting means for irradiating the photosensitive drum 102 with an optical image utilizing a polygon mirror 104, according to image information from a host computer.

A recording sheet contained in a sheet cassette 105 is separated one by one and fed by a sheet feeding roller 106 and sheet separating means 107, based on a print signal from a host computer (not shown). The separated recording sheet is conveyed by paired conveying rollers 108 to a transfer portion constituted of the photosensitive drum 102 and a transfer roller 109 pressed to the photosensitive drum 102.

In this manner, the photosensitive drum 102 charged by charging means 101b is exposed to an optical image corresponding to the image information to form a latent image, which is rendered visible by development with toner in the developing means 101c, and a toner image is transferred onto the recording sheet in a pressed portion between the photosensitive drum 102 and the transfer roller 109.

The recording sheet bearing the transferred toner image is conveyed to a fixing portion (fixing means) constituted of a fixing film 110 and a pressure roller 111 pressed to the fixing film 110, wherein the toner image is fixed. The recording sheet on which the toner image is fixed is conveyed by paired discharge rollers 112 and is discharged to a discharged sheet stacking portion 113 provided above the printer 2.

The discharged sheet stacking portion 113 is provided on an upper surface of a cartridge door 6 constituting a part of the casing (external cover) of the printer 2. The cartridge door 6 is provided on a frame 7 of the printer 2, rotatably about a rotary center A. By opening the cartridge door 6 from the main body of the main body of the printer 2, the interior of the printer 2 can be opened thereby enabling access to the cartridge 101 and jam processing of the recording sheet.

The scanner 3 is a scanner (reader for reading an original) of flat bed type, and is provided therein with scanning means which scans and reads an original.

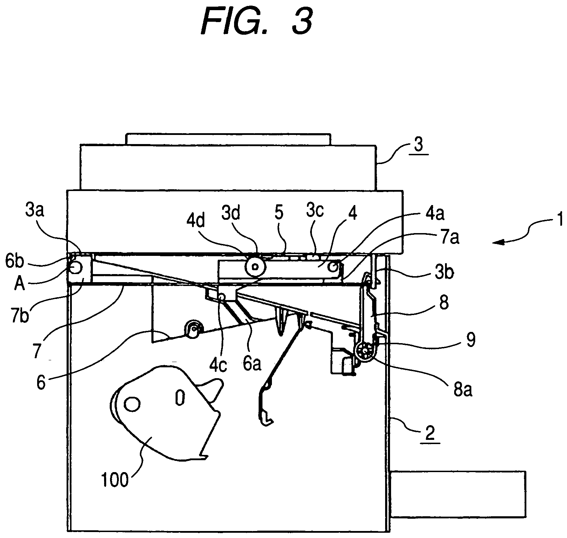

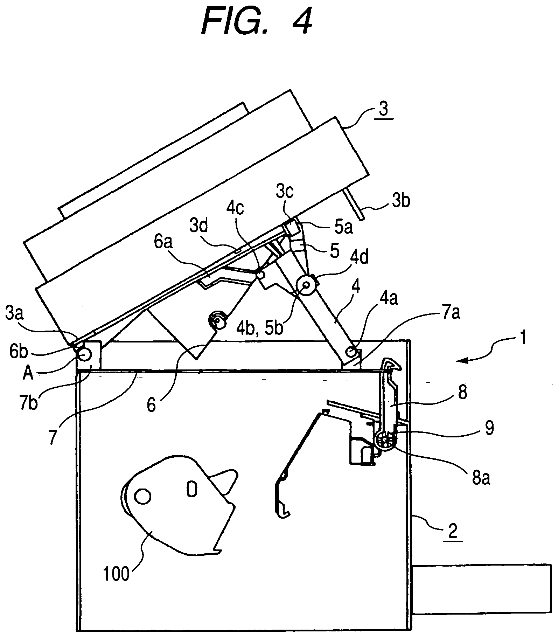

In the following, there will be explained an open/closable mechanism of the scanner 3 and the cartridge door 6. Fig. 3 shows an open/closable link mechanism in a state where the scanner 3 is closed, and Fig. 4 shows an open/closable link mechanism in a state where the scanner 3 is opened.

As shown in Fig. 3, a scanner rotation supporting portion 3a is provided in a rear position under the scanner 3.

The cartridge door 6 as the open/closable member (an openable and closable member) is movable with respect to said image forming portion and toward the image reading portion. The cartridge door 6 is provided to be opened and closed with respect to a main body of the image forming apparatus.

The scanner 3 is mounted rotatably about the rotary center A with respect to the printer 2, by a scanner rotation supporting portion 7b which constitutes a part of a frame 7 of the main body of the printer 2. Also an end portion, at a side opposite to the rotary center, is fixed by an engagement of a recess of a hook 3b provided in the front end portion of the scanner 3 with a claw of a latch 8 provided inside the printer 2.

The latch 8 is constantly biased by a latch spring 9 about a rotation center 8a of the latch, in a direction to engage with the hook 3b.

The latch 8 and a latch releasing button 10 shown in Fig. 1 are so supported as to be linked on a same axis. When the latch releasing button 10 is depressed, the latch 8 is released from the hook 3b of the scanner 3 whereby the front portion thereof is lifted upwards. Thus the scanner 3 is rendered rotatable about the rotary center A.

Also the printer 2 and the scanner 3 are linked by a pair of link members, each constituted of a lower link 4 and an upper link 5. Among these, the lower link 4 is provided with a lower link rotation supporting portion 4a which is rotatably supported by a lower rotation supporting portion 7a of the frame 7 of the printer 2. On the other hand, the upper link 5 is provided with an upper link rotation supporting portion 5a which is rotatably supported by an upper rotation supporting portion 3c provided in a lower portion of the scanner 3.

These upper link 5 and lower link 4 are rotatably connected at a lower link connecting portion 4b and an upper link connecting portion 5b, respectively opposite to the supporting portions. Through such connections, the lower surface of the scanner 3, the frame 7 of the printer 2, the lower link 4 and the upper link 5 are rotatably supported at the rotation supporting portions to constitute 4-articulation links.

The lower link 4 is provided, at a front end opposite to the rotation supporting portion, with a link projection 4c protruding toward the cartridge door 6. Also the cartridge door 6 is provided, on a lateral face thereof, with a guide groove 6a in which the link projection 4c is loosely fitted and slides.

Along the rotary motion of the lower link 4, the link projection 4c reciprocates in the guide groove 6. The link projection 4c pushes up an upper face of the guide groove 6a to rotate the cartridge door 6 in an opening direction, and pushes down a lower face to rotate the cartridge door 6 in a closing direction.

The lower link 4 is provided, on an upper face thereof, with a projection 4d. Also the scanner 3 is provided, on a lower face thereof, with a projection 3d in a position to press the projection 4d downwards in the closed state of the scanner 3.

Such downward depressing of the projection 4d by the projection 3d and simultaneous downward depressing of the lower surface of the guide groove 6a by the link projection 4c cause the lower face of the guide groove 6a to be depressed downwards. Therefore, the cartridge door 6 can be securely closed to a predetermined position by the completion of the closing operation of the scanner 3.

In the following an open-closing operation of the scanner 3 and the cartridge door 6 will be explained. Rotating direction will be represented as clockwise or counterclockwise, looking at the plane of Figs. 3 and 4.

In a stationary state as shown in Fig. 3, the scanner 3 is fixed to the printer 2 by engagement of the hook 3b, at an end opposite to the rotary center of the scanner rotation supporting portion 3a, with the latch 8.

In case of opening the interior of the printer 2 for replacing the cartridge 101 or for jam processing, the latch releasing button 10 is depressed. Thus the latch 8 linked with the latch releasing button 10 is rotated counterclockwise and the hook 3b is released from the latch 8. Thus the scanner 3 is freed at a side opposite to the rotation supporting portion, thereby being rendered rotatable about the rotary center A.

Then, by lifting the scanner 3 at a side thereof opposite to the rotation supporting portion, the scanner 3 rotates counterclockwise about the rotary center A.

In this operation, the scanner 3, the frame 7 of the printer 2, the lower link 4 and the upper link 5 constitute a 4-articulation link. Therefore, with the rotation of the scanner 3, the lower link 4 rotates clockwise on a predetermined trajectory about the lower link rotation supporting portion 4a, and the upper link 5 rotates counterclockwise on a predetermined trajectory about the upper link connecting portion 5b.

At the same time, the link projection 4c provided on the lower link 4 rotates on a predetermined trajectory along with the rotation of the lower link 4. Thus the upper face of the fitted guide groove 6a is pressed upwards.

By the upward pressed motion of the guide groove 6a, the cartridge door 6 is pressed upwards and rotates counterclockwise about the cartridge door rotation supporting portion 6b. As a result, the opening of the scanner 3 simultaneously cause opening of the cartridge door 6, thereby enabling access to the interior of the printer 2.

Also for closing the scanner 3, an end opposite to the rotation supporting portion thereof is pressed downwards whereby the scanner rotates clockwise. In this operation, since the lower face of the scanner 3, the frame 7 of the printer 2, the lower link 4 and the upper link 5 constitute a 4-articulation link, with the rotation of the scanner 3, the lower link 4 rotates counter clockwise on a predetermined trajectory about the lower link rotation supporting portion 4a, and the upper link 5 rotates clockwise on a predetermined trajectory about the upper link connecting portion 5b.

Also the link projection 4c provided on the lower link 4 rotates on a predetermined trajectory along with the rotation of the lower link 4, thus pressing down the lower face of the fitted guide groove 6a. The downward motion of the guide groove 6a presses downwards the cartridge door 6 which rotates clockwise about the cartridge door rotation supporting portion 6b.

On the other hand, the latch 8 is constantly urged clockwise by the latch spring 9. It is momentarily rotated counterclockwise against the urging force of the latch spring 9, by the entry of the hook 3b from above immediately before complete closing of the scanner 3, and is thereafter rotated clockwise again by the latch spring 9. Thus the hook 3b engages with the latch 8 to fix the end of the scanner 3 opposite to the rotary center.

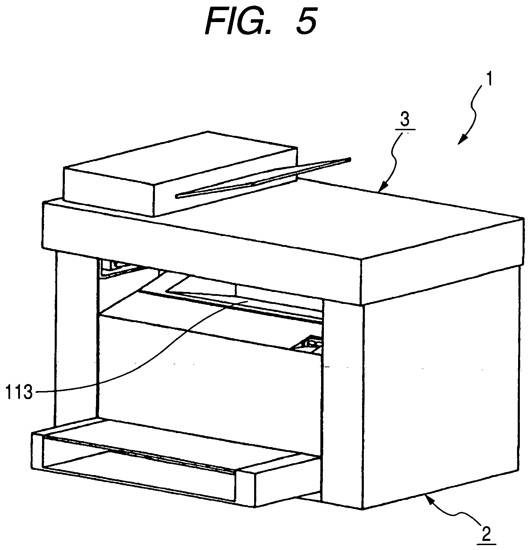

When the scanner 3 is completely closed as shown in Fig. 5, the projection 4d of the lower link is depressed downwards by the projection 3d of the scanner 3 and the lower face of the guide groove 6a is pressed downwards by the link projection 4c. As a result, the cartridge door 6 can be securely closed in a predetermined position.

Thus, in the present embodiment, the cartridge door 6 displaces in linkage with the displacement of the scanner 3.

In this manner, the present embodiment allows to effect moving (open-close) the cartridge door 6 in a single action of displacing the scanner 3 without increasing the distance between the scanner 3 and the printer 2, thereby enabling to reduce the dimension of the apparatus and to improve operation characteristics for the user.

For the scanner 3, the opening angle is preferably made as small as possible in consideration of a height occupied by the apparatus and a stability thereof. On the other hand, for the cartridge door 6, the opening angle is preferably made larger in consideration of easy access to the interior of the printer 2.

Therefore, a configuration of the first embodiment in which the cartridge door 6 is opened through the link members constituted of the lower link 4 and the upper link 5 allows to obtain a larger opening angle in the cartridge door 6 than in the opening angle of the scanner 3, in comparison with a configuration in which the cartridge door 6 is simply pulled up by the scanner 3. Thus, access to the cartridge is facilitated without impairing the stability.

In the first embodiment, the scanner rotation supporting portion 3a and the cartridge door rotation supporting portion 6b have a same rotary center A.

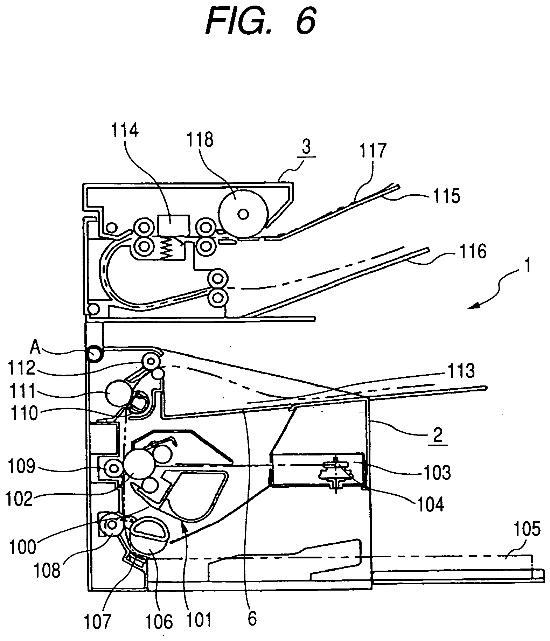

In the following there will be explained an image forming apparatus constituting a second embodiment of the present invention. Fig. 6 shows an internal structure of a printer and a scanner, in a integrated apparatus as the image forming apparatus of the second embodiment.

Referring to Fig. 6, the scanner 3 is provided with a contact image sensor (CIS) 114 constituting an original reading portion, and an original stacking tray 115 and an original discharge tray 116 provided respectively at upstream and downstream sides of the CIS 114.

Originals (sheet materials) 117 are set on the original stacking tray 115 for example with image-bearing surfaces upwards, and are conveyed one by one from an uppermost one by a pickup roller 118 to an original reading portion.

The conveyed original 117 is subjected, by the contact image sensor 114, to a photoelectric reading of the image on the original, and the original 117 after image reading is discharged onto the original discharge tray 116 in the original reading portion, for example with the image-bearing surface downwards.

Also between the scanner 3 and the printer 2, a lower link and an upper link are provided in a 4-articulation structure as in the first embodiment. The open-closing operation of the scanner 3 and the linked movement of the cartridge door 6 are similar to those in the first embodiment, and will not, therefore, be explained further.

The present embodiment can provide similar effects as those in the foregoing embodiment.

According to the embodiments explained in the foregoing, the image forming apparatus is provided with the image reading means above the image forming means across the discharged sheet stacking portion, and the image reading means and a part of the cover of the image forming means are constructed rotatably to enable open-closing of the cover in a single action while minimizing the height of the image forming apparatus and to achieve the open-closing operation of the cover of the image forming means in linkage with the open-closing operation of the image reading means, thereby significantly improving the operability.

Also in the aforementioned embodiments, the discharged sheet stacking means is provided between the image forming means and the image reading means provided thereabove to achieve effective utilization of the space and to enable satisfactory observation of the interior of the image forming portion, thereby securing a sufficient open space for facilitating the replacement of the consumable parts.

In the following, there will be explained an embodiment in which apparatuses in the image forming portion are securely made inactive when a door is opened.

An image forming apparatus 1 of a third embodiment of the present invention is a integrated apparatus provided with an image forming portion (hereinafter called printer portion) 2 and an image reading portion (hereinafter scanner portion) 3, and is capable of functioning not only as a printer or a copying apparatus for forming an image by the printer portion 2 according to image information from an external equipment such as a host computer connected communicably with the image forming apparatus 1 or according to image information of an original read by the scanner portion 3, but also as a scanner apparatus for transmitting image information of an original read by the scanner portion 3 to an external equipment connected communicably with the image forming apparatus 1.

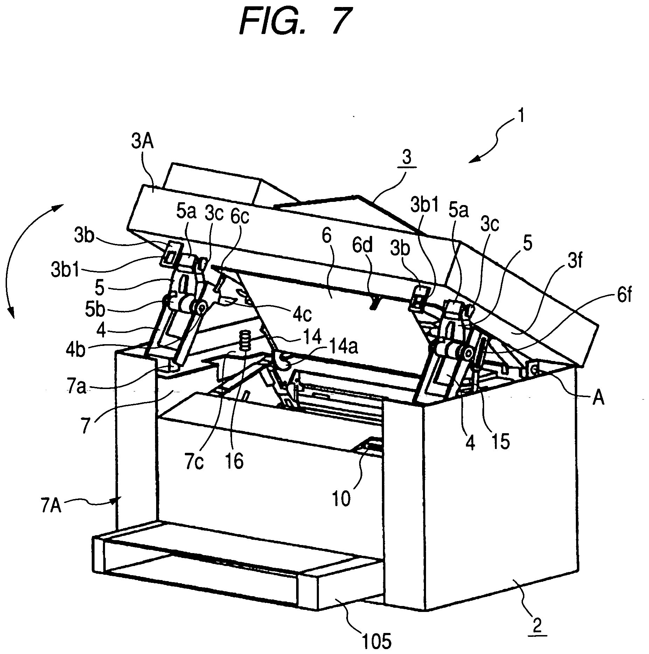

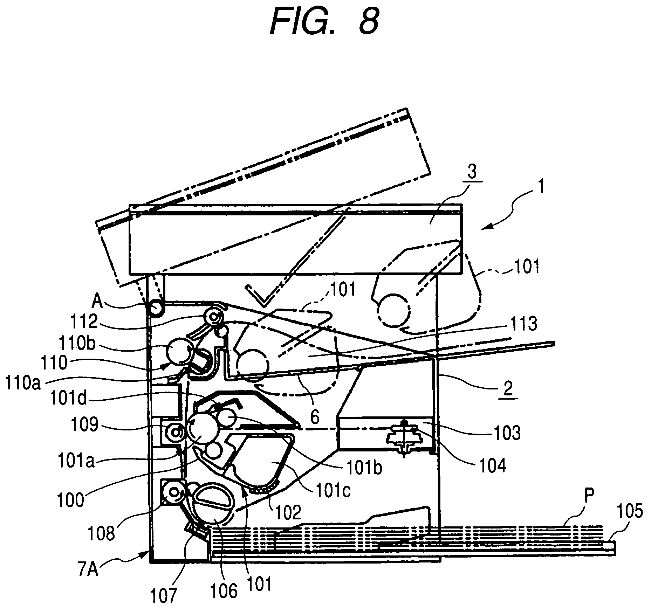

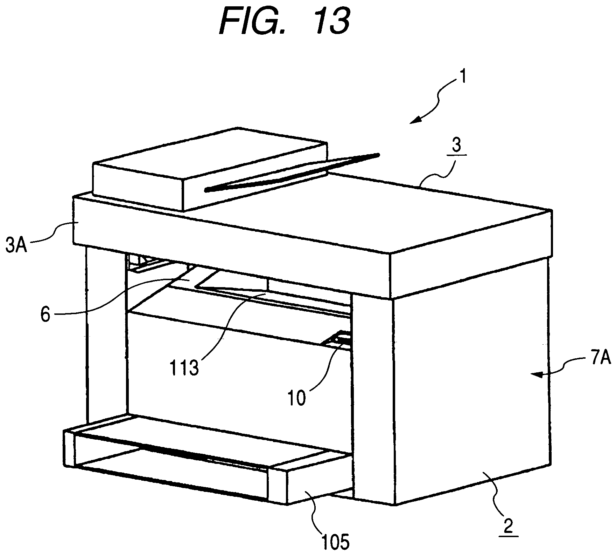

In the following description, "front side" with respect to the image forming apparatus 1 means a front side in the views shown in Figs. 7 and 13 or a right-hand side in Figs. 8 to 11, while "rear side" means a rear side in the views shown in Figs. 7 and 13 or a left-hand side in Figs. 8 to 11, and "left" or "right" with respect to the image forming apparatus 1 means a left- or right-hand wide when the image forming apparatus 1 is seen from the "front side".

### (Entire configuration of image forming apparatus)

At first the configuration of the image forming apparatus 1 will be explained briefly, with reference to Figs. 7, 8 and 13.

The image forming apparatus 1 is principally constituted of a printer portion 2 and a scanner portion 3, and the scanner portion 3 is provided above the printer portion 2 with a recording material discharging portion (to be explained later) positioned therebetween. As will be explained more detailedly in the following, the scanner portion 3 is mounted rotatably with respect to the printer portion 2, about a rotary (rotation) center A along a lateral direction (substantially perpendicular to a conveying direction of a recording material P) of the image forming apparatus 1 at a rear end thereof. The printer portion 2 and the scanner portion 3 are connected by a pair of link members, each constituted of a lower link 4 and an upper link 5, respectively provided in the vicinity of left and right front ends of the image forming apparatus 1. Thus, as will be explained later in more detail, by lifting a front end portion 3A of the scanner portion 3 with respect to the printer portion 2, a door 6 covering the substantially entire upper surface of the printer portion 2 is opened together with the scanner portion 3, thereby exposing the interior of the printer portion 2. The rotary center of the scanner portion 3 is not limited to the position in the present embodiment, but can be in an arbitrary position as long as the interior of the printer portion 2 can be sufficiently exposed.

Fig. 8 shows the internal structure of the printer portion 2, which is a laser beam printer for recording an image on a recording material P for example a recording paper, a plastic sheet (overhead projector (OHP) sheet) or a cloth by an electrophotographic process. The electrophotographic process will not be explained in detail as it is well known to those skilled in the art, but forms an image briefly in following configurations and functions. In Fig. 8, the link members are omitted for facilitating the understanding of the internal structure.

In the printer portion 2, a cylindrical electrophotographic photosensitive member (hereinafter called photosensitive drum) 101a serving as an image bearing member is rotatably supported, and, at the image formation, the surface of the rotating photosensitive drum 101a is uniformly charged by a charging roller 101b serving as charging means. The charged photosensitive drum 101a is irradiated with an optical image corresponding to image information from exposure means (image writing means) 103 to form an electrostatic latent image on the photosensitive drum 101a. In a front part of the printer portion 2, there is provided a laser scanner unit 103 constituting exposure means for irradiating the photosensitive drum 101a with the optical image. The laser scanner unit 103 irradiates the photosensitive drum 101a with a laser beam (scan exposure) through a polygon mirror 104 according to the image information for example from a host computer, thereby forming an electrostatic latent image corresponding to the image information on the photosensitive drum 101a. Naturally the electrostatic latent image can be formed corresponding to image information read by the scanner portion 3.

The electrostatic latent image formed on the photosensitive drum 101a is then developed as a developer image (toner image) by the supply of developer (toner) in a developing device 101c serving as development means.

Recording materials P contained in a cassette 110 constituting recording material storage portion are separated and conveyed one by one by a feeding roller 106 serving as a recording material feeding member and a separating pad 107 serving as recording material separating means, in response to a print signal for example from a host computer. The separated recording material P is conveyed by paired conveying rollers 108 constituting recording material conveying members to a transfer portion constituted by the photosensitive drum 101a and a transfer roller 109 pressed thereto and constituting transfer means.

Thus the toner image is transferred onto the recording material P at the pressed portion (transfer portion) of the photosensitive drum 101a and the transfer roller 109. The recording material P bearing the transferred toner image is conveyed to a fixing portion (fixing means) 110 constituted of a fixing film 110a and a pressure roller 110b pressed thereto, thus subjected to fixation of the toner image. The recording material P bearing the fixed toner image is conveyed by paired discharge rollers 112 and is discharged to a recording material discharge portion 13 above the printer portion 2.

Toner, remaining of the photosensitive drum 101a after the transfer of the toner image by the transfer roller 109 from the photosensitive drum 101a to the recording material P, is eliminated by cleaning means 101d including a cleaning blade as a cleaning member in contact with the photosensitive drum 101a.

In the present embodiment, the photosensitive drum 101a and process means acting thereon, including the charging roller 101b, the developing device 101c and the cleaning means 101d are integrally constructed by a cartridge frame 100 as a process cartridge 101 detachably mountable in the image forming portion 2, namely in a main body of the image forming apparatus. The process cartridge 101, as will be explained later in more details, can be mounted by opening the scanner portion 3 and the door 6 and by an inserting operation in a direction from the front side of the image forming apparatus 1 along a direction crossing the longitudinal direction (longitudinal direction of the photosensitive drum 101a) as indicated by a chain line in Fig. 8 and for example along an unillustrated guide member provided in the image forming portion 2, and can be detached by inverse operations. The process cartridge 101 is detachably mounted in the image forming portion 2 by cartridge mounting means (positioning means) 102 such as a supporting member or a positioning member provided in the image forming portion 2. The process cartridge is not limited to a configuration of the present embodiment, but may include an electrophotographic photosensitive member and at least one of charging means, developing means and cleaning means as process means acting on the electrophotographic photosensitive member as an integral cartridge detachably mountable in the main body of the image forming apparatus.

A recording material discharge portion 113 is provided on an upper surface of the door 6 constructed as an open/closable member and constituting a part of a casing (external cover) 7A of the printer portion 2. The door 6 is provided in a frame member 7, which is the casing 7A of the printer portion 2 excluding the door 6, open-closably about a rotary center A at the rear end of the image forming apparatus 1 and common with that of the scanner portion 3. Opening of the door 6 relative to the main body of the printer portion 2 exposes the interior of the printer portion 2, thereby enabling access to the process cartridge 101 and jam processing of the recording material P by the operator. In the present embodiment, the rotary center of the door 6 is selected common as that of the scanner portion 3.

The scanner portion 3 is a known scanner of flat bed type having a photoelectric converting element in an image pickup portion for optically reading an original image. Such scanner portion 3 may be of already known internal structure and function, which will not be explained in detail.

### (Open-closing mechanism of scanner and door)

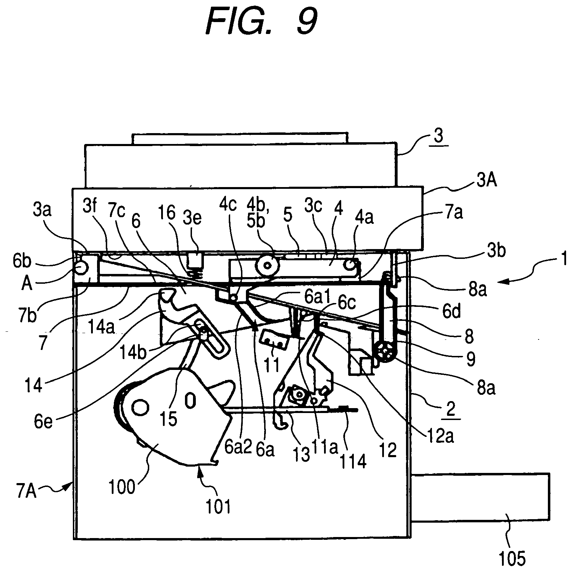

In the following, a detailed description will be given on the open-closing mechanism of the scanner portion 3 and the door 6, with reference to Figs. 9 to 12.

In a lower rear part of the scanner portion 3, there is provided a scanner rotation supporting portion 3a constituting a hinge portion, and such scanner rotation supporting portion 3a is mounted, rotatably about a rotary center A, on a scanner rotation supporting portion 7a integrally formed with an upper surface 7c of the frame 7 of the printer portion 2, whereby the scanner portion 3 is made integral with the printer portion 2. Also a front end portion 3A of the scanner portion 3, at a side opposite to the rotary center A, is fixed, in a closed state of the scanner portion 3, by an engagement of a recess 3b1 (Fig. 7) of a hook 3b provided under the end portion 3a with a claw 8a of a latch 8 provided as fixing means inside the printer portion 2. In this manner the scanner portion 3 can be fixed in the closed state. In the present embodiment, the hook 3b and the latch 8 are provided each vicinity of the left and right ends of the image forming apparatus 1.

The latch 8 is constantly biased by a latch spring 9 about a rotation center 8a of the latch, in a direction to engage with the hook 3b (toward the front of the image forming apparatus 1 in the present embodiment). A latch releasing button 10 (Fig. 7) serving as releasing means for unlocking the hook 3b and the latch 8 is so supported as to coaxially link with the latch 8, and a depression of the latch releasing button 10 releases the latch 8 from the engagement with the hook 3b.

The printer portion 2 and the scanner portion 3 are linked, as connecting means, by a pair of link members, each constituted of a lower link 4 as a first link member and an upper link 5 as a second link member, provided in each vicinity of the left and right front ends of the image forming apparatus 1. In the present embodiment, the lower link 4 and the upper link 5 move (rotate) along a plane substantially parallel to a front-rear direction of the image forming apparatus 1 (substantially parallel to the plane of Figs. 8 to 12). In the present embodiment, the link members 4, 5 provided at left and right of the image forming apparatus 1 have a substantially same configuration and serve for a same function. The link members constituting the connecting means need not necessarily be provided on left and right sides of the image forming apparatus 1 but may be provided on either side thereof. Also the connecting means may typically have a configuration including at least two link members serially connecting the printer portion 2 and the scanner portion 3, but is not limited to the configuration of the present embodiment in which each set is constituted of two link members. The connecting means may be constituted of a larger number of link members as a set.

The lower link 4 is mounted on the printer portion 2, by a configuration that a lower link rotation supporting portion 4a is rotatably supported by a lower link rotation supporting portion 7a provided on an upper surface 7c of the frame 7 of the printer portion 2. The upper link 5 is mounted on the scanner portion 3 by a configuration in which an upper link rotation supporting portion 5a is rotatably supported by an upper link rotation supporting portion 3c provided in a lower part of the scanner portion 3. The lower link 4 and the upper link 5 are rotatably connected by a lower link connecting portion 4b, provided at an end opposite to the lower link rotation supporting portion 4a, and an upper link connecting portion 5b, provided at an end opposite to the upper link rotation supporting portion 5a. The lower face of the scanner portion 3, the frame member 7 of the printer portion 2, the lower link 4 and the upper link 5 are rotatably supported at the respective rotation supporting portions to constitute a 4-articulation link mechanism.

The lower link 4 is provided, at a front end opposite to the lower link rotation supporting portion 4a, with a link projection 4c extending to the door 6 toward the interior of the printer portion 2 and serving as support means for supporting the door 6. On the other hand, on a lateral face of the door 6, a guide groove 6a is provided as receiving means in which the ink projection 4c can be substantially fitted and slide. The link projection 4c reciprocates in the guide groove 6a along the rotary motion of the lower link 4. Then door 6 rotates in an opening direction when the link projection 4c presses up the upper surface 6a1 of the guide groove 6a and the door 6 rotates in a closing direction when the link projection 4c presses down the lower surface 6a2.

Between the upper surface 7c of the frame member 7 of the printer portion 2 and the bottom surface 3f of the scanner portion 3, there is provided a pop-up spring 16 constituting an elastic urging means, and the scanner portion 3 is provided with a spring projection 3e for securely pressing the pop-up spring 16. As will be explained later in more details, when the hook 3b of the scanner portion 3 and the latch 8 of the printer portion 2 are unlocked, the spring projection 3e is pressed by the pop-up spring 16, thereby maintaining the scanner portion 3 in a state rotated by a predetermined angle about the rotary center A. Then the scanner portion 3 can be rotated about the rotary center A by further lifting the front part of the scanner portion 3.

The printer portion 2 is provided with a release object, which is shifted between a first state corresponding to an operation enabled state of the printer portion 2 and the scanner portion 3, and a second state corresponding to an operation disabled state. In the present embodiment, there is provided, as a release object, an interlocking switch 11 for turning on/off controllers of the printer portion 2 and the scanner portion 3, and such interlocking switch 11 is connected to a controller for the printer portion 2 and the scanner portion 3, provided in the printer portion in the present embodiment. The functions of the printer portion 2 and the scanner portion 3 are turned on and off by turning on/off the interlocking switch 11. The door 6 is provided with an interlocking switch projection 6c, for depressing a switch lever 11a of the interlocking switch 11 for switching thereof. In a closed state of the door 6, the interlocking switch projection 6c depresses the switch lever 11a thereby turning on the interlocking switch 11 and activating the printer portion 2 and the scanner portion 3. In a state where the door 6 is opened by a certain angle or larger, the interlocking switch projection 6c is left from the switch lever 11a thereby turning off the interlocking switch 11 and deactivating the printer portion 2 and the scanner portion 3.

In the present embodiment, there is also provided, as a release object, with a laser shutter open/closing mechanism 12 constituting interception means for turning on/off the laser scanner unit, and a laser shutter switch 12a of the laser shutter open/closing mechanism 12 is moved vertically to turn on/off the laser beam irradiation from the polygon mirror 104 of the laser scanner unit 103. The door 6 is provided, as switching means for the interception means, with a laser switch projection 6d for depressing the laser shutter switch 12a, and, in a state where the door 6 is closed, the laser switch projection 6d depresses the laser shutter switch 12a to turn on the laser shutter open/closing mechanism 12, thereby enabling irradiation of the laser beam and allowing to form an electrostatic latent image on the photosensitive drum 101a in the process cartridge 101 mounted in the printer portion 2. In a state where the door 6 is opened by a certain angle or larger, the laser switch projection 6d is released from the laser shutter switch 12a to turn off the laser shutter open/closing mechanism 12, thereby disabling irradiation of the laser beam.

Also the printer portion 2 is provided, as a release object, with a pressure releasing lever 14 constituting fixing pressure releasing means, and such pressure releasing lever rotates about an arbitrary rotary axis (in the vicinity of the fixing portion 110 in the present embodiment) whereby a pressure releasing lever 14a presses open a metal plate for regulating the pressure of the fixing portion, thereby releasing the pressure applied to the recording material P by the fixing film 110a and the pressure roller 110b in the fixing portion 110. The pressure releasing lever 14 is provided with a pressure releasing lever groove 14b formed by an elongated round hole and engaging with a pressure releasing lever projection 6e, constituting means for switching a fixing pressure releasing mechanism, provided on the lateral face of the door 6, so that, by an open-closing operation of the door 6, the pressure releasing lever 14 rotates in a same direction. Consequently, in a state where the door 6 is closed, the pressure releasing lever 14 is also closed to apply a pressure in the fixing portion 110. In a state where the door 6 is opened by a certain angle or larger, the pressure releasing lever 14 is also opened to release the pressure in the fixing portion 110.

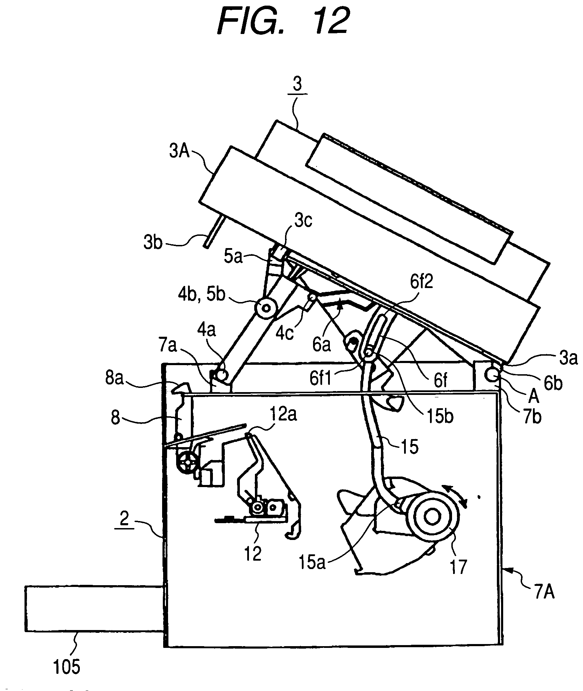

The printer portion 2 is further provided, as a release object, with drive transmission releasing means for connect/releasing a drive transmission path to the process cartridge 101. In the present embodiment, also referring to Fig. 12, the driving force to the process cartridge 101 is transmitted through a cartridge-side coupling provided at a longitudinal end (an end in the rear part in Fig. 8 or in the front part of Fig. 12) of the photosensitive drum 101a to be driven. The printer portion 2 is provided with a coupling gear as transmission means for transmitting the driving power from a driving motor, provided as drive means in the printer portion 2, to the aforementioned cartridge-side coupling of the process cartridge 101 provided in a normal image forming position. The printer portion 2 is also provided with a coupling releasing lever 15, of which a lower end portion 15a is connected with a coupling cam 17. The coupling cam 17, by a rotation, displaces the coupling gear so as to connect/release the cartridge-side coupling and the coupling gear. The coupling releasing lever 15 and the coupling cam 17 constitute drive transmission releasing means. The coupling releasing lever is provided, at an upper end thereof, with a coupling releasing lever projection 15b, which is loosely fitted in a coupling releasing groove 6f provided as coupling switching means in the door 6 thereby sliding in the coupling releasing groove 6f. Thus, by an open-closing operation of the door 6, the coupling releasing lever 15 executes a vertical movement thereby rotating the coupling cam 17.

When the door 6 is opened, a lower end 6f1 of the coupling releasing groove 6f pulls up the upper end 15b (coupling releasing lever projection) of the coupling lever, whereby the lower end 15a of the coupling lever pulls in the coupling cam 17. As a result, the coupling cam rotates clockwise in Fig. 12, and the coupling gear provided in the printer portion 2 is retracted to release the transmission of the driving power to the cartridge-side coupling of the process cartridge 101.

When the door 6 is closed, an upper end 6f2 of the coupling releasing groove 6f presses down the upper end 15b (coupling releasing lever projection) of the coupling lever, whereby the lower end 15a of the coupling lever presses in the coupling cam 17. As a result, the coupling cam rotates counterclockwise in Fig. 12, whereby the coupling gear of the printer portion 2 meshes with the cartridge-side coupling of the process cartridge 101, thereby enabling driving power transmission.

### (Open-closing operation of scanner portion and door)

In the following, open-closing operation of the scanner portion 3 and the door 6 will be explained.

In a stationary operation, namely in a printing operation or an original scanning operation in a state where the process cartridge 101 is mounted in the printer portion 2, the scanner portion 3 is fixed to the printer portion 2 by the scanner rotation supporting portion 3a and by a locking portion where the hook 3b provided at the front part 3A of the scanner portion 3 opposite to the rotary center A engages with the latch 8 of the printer portion 2 (first position) (Fig. 9).

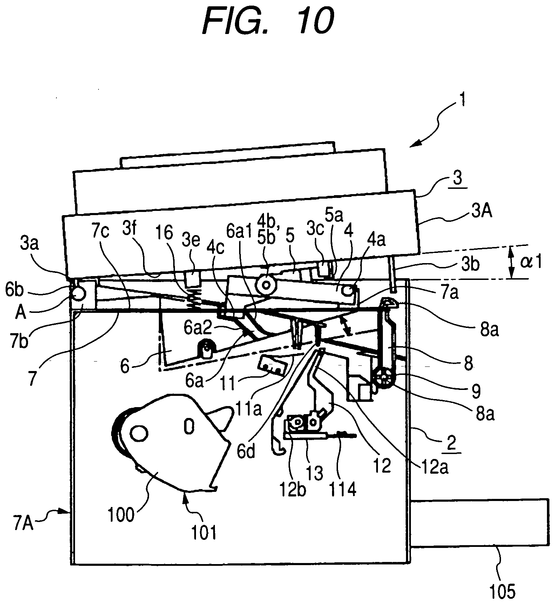

In case of opening the interior of the printer portion 2 for the replacement of the process cartridge 101 or for a jam processing, the latch releasing button 10 is depressed to cause the linked latch 5 to rotate counterclockwise, whereby the hook 3b is released from the latch 8. Thus, the spring projection 3e is depressed by the pop-up spring 16 provided between the upper face 7c of the frame member 7 of the printer portion 2 and the spring projection 3e of the bottom face 3f of the scanner portion 3 whereby the scanner portion 3 rotates counterclockwise in Fig. 9 to a predetermined angle α1 to the printer portion 2 and maintained in such state (Fig. 10).

Therefore, the operator can easily recognize that the hook 3b and the latch 8 are unlocked.

In this state, as the scanner portion 3, the frame member 7 of the printer portion 2, the lower link 4 and the upper link 5 constitute a 4-articulation link, with the rotating motion of the scanner portion 3, the lower link 4 rotates clockwise in Figs. 9 and 10 about the lower link rotation supporting portion 4a, while the upper link 5 rotates counterclockwise in Figs. 9 and 10 about the upper link connecting portion 5b, respectively along predetermined trajectories.

With the rotation of the lower link 4, the link projection 4c provided on the lower link 4 also rotates along a predetermined trajectory, thereby pushing up the upper face 6a1 of the fitted guide groove 6a.

By such upward pushing of the guide groove 6a, the door 6 is pressed upwards and rotates counterclockwise in Fig. 10, about a rotation supporting portion 6b of the door 6, mounted rotatably in the rotation supporting portion of the frame member 7 of the printer portion 2 about the rotary center A common with that of the scanner portion 3.

Also when the scanner portion 3 and the door 6 through the link members 4, 5 are opened to predetermined angles in response to the depression of the latch releasing button 10, the interlocking switch projection 6c, the laser switch projection 6d, the pressure releasing lever 6e and the coupling releasing groove 6f associated with the door 6 are pushed up together. Thus, in a state where the door 6 is opened to a predetermined angle α1, the interlocking switch projection 6c is released from the interlocking switch lever 11a, while the laser switch projection 6d is released from the shutter switch 12a, also the pressure releasing lever 6e releases the fixing pressure of the fixing portion 110, and the coupling releasing groove 6f pulls the coupling releasing lever 15 upwards.

As a result, the interlocking switch 11 is in a released state, and the functions of the printer portion 2 and the scanner portion 3 are stopped, so that the operator can safely access to the interior of the printer portion 2. Also the laser beam, being intercepted, does not enter the eyes of the operator. Also in case the recording material P is under passing, it can be extracted with a weak force, since the fixing pressure is released. Also the process cartridge 101 can be taken out easily, as the coupling for transmitting the driving force thereto is also released.

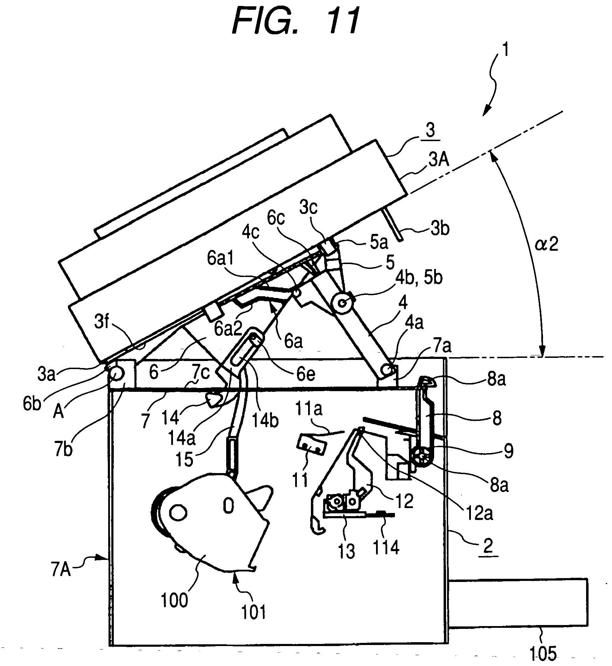

By further lifting manually the front end part 3A of the scanner portion 3 from a state where the scanner portion 3 is opened by the predetermined angle α1 relative to the printer portion 2, the scanner portion 3 and the door 6 are further pushed upwards. Then, by pushing the scanner portion 3 to a predetermined angle α2 to the printer portion 2, the lower link 4 and the upper link 5 are maintained within an extent manually releasable in closing the scanner portion 3, thus supporting the scanner portion 3 in an open state. In this state, the link projection 6e supports the guide groove 6a, and the door 6 is maintained in an open state. Thus the operator is rendered accessible to the interior of the printer portion 2 (second position) (Fig. 11).

On the other hand, in closing the scanner portion 3, the front part 3A of the scanner portion 3 opposite to the rotary center A is pressed down whereby the scanner portion 3 rotates clockwise in Figs. 9 to 11. As the lower surface of the scanner portion 3, the frame member 7 of the printer portion 2, the lower link 4 and the upper link 5 constitute a 4-articulation link, with the rotating motion of the scanner portion 3, the lower link 4 rotates clockwise in Figs. 9 to 11 about the lower link rotation supporting portion 4a, while the upper link 5 rotates counterclockwise therein about the upper link connecting portion 5b, respectively along predetermined trajectories.

With the rotation of the lower link 4, the link projection 4c provided on the lower link 4 also rotates along a predetermined trajectory, thereby pushing down the lower face 6a2 of the fitted guide groove 6a, whereby the door 6 is pressed down and rotates clockwise about the door rotation supporting portion 6b.

When the door reaches a normal closed state, the interlocking switch projection 6c, the laser switch projection 6d, the pressure releasing lever 6e and the coupling releasing groove 6f associated with the door 6 are pushed downward together. Thus, the interlocking switch 11 is turned on, the laser beam irradiation is made possible by the laser shutter open/closing mechanism, the fixing pressure is secured by the pressure releasing lever 14, and the transmission of the driving force to the process cartridge 101 is turned on by the coupling releasing mechanism whereby the ordinary printing operation is enabled.

Also the latch 8 is constantly biased clockwise in Figs. 9 to 11 by the latch spring 9, but, immediately before complete closing of the scanner 3, it is momentarily rotated counterclockwise against the urging force of the latch spring 8a, by the entry of the hook 3b from above, and is thereafter rotated clockwise again by the latch spring 8a. Thus the recess 3b1 of the hook 3b engages with the claw 8a of the latch 8 to fix the end part 3A of the scanner 3 opposite to the rotary center A.

According to the present invention, in the image forming apparatus 1 having the scanner portion 3 above the printer portion 2 across the recording material discharge portion, the scanner portion 3 and the cover 6 constituting a part of the printer portion 2 are constructed rotatable to enable open-closing of the cover 6 together with the open-closing operation of the scanner portion 3, thereby minimizing the footprint and the height of the image forming apparatus and significantly improving the operability.

Also the open-closing operation of the scanner portion 3 allows to simultaneously achieve, through the function of the door 6, an on/off operation of the interlocking switch 11, an interception of the laser scanner unit 13, an on/off operation of the fixing pressure and an on/off operation of the driving power transmission to the process cartridge 101.

Thus, by positioning the scanner portion 3 above the printer portion 2 across the recording material discharge portion 113, it is rendered possible to reduce the footprint and height of the apparatus as far as possible, while securing a sufficient space for opening the interior of the printer portion 2, and to achieve safe and easy access to the interior of the printer portion 2 by a single opening operation of the scanner portion 3 thereby enabling safe and easy operations of trouble processing, cleaning, replacement of internal consumable parts etc. in the interior of the printer portion 2.

Also in the present embodiment, substantially simultaneously with the unlocking of the hook 3b and the latch 8 by the depression of the latch releasing button 10 (namely until the scanner portion 3 reaches the pop-up state), the printer portion 2 and the scanner unit 3 reaches a stopped state (turning-off of the interlocking switch, interception of the laser scanner unit, and release of the driving power transmission to the process cartridge 101) through the link members 4, 5 and the door 6. In this manner, it is possible to prevent the functions of the printer portion 2 and the scanner portion 3 in such unlocked state.

However the present invention is not limited to such embodiment, and the printer portion 2 and the scanner portion 3 may be brought to the stopped state in a period while the scanner portion 3 and the door 6 are opened further from the pop-up state of the scanner portion 3 to a state enabling access of the operator to the interior of the printer portion 2. Also the invention is not limited to an embodiment in which the scanner portion 3 and the door 6 start to open simultaneously but the link projection 4c and the guide groove 6a may be so constructed that the door 6 starts to open when the scanner portion 3 is opened by a predetermined angle.

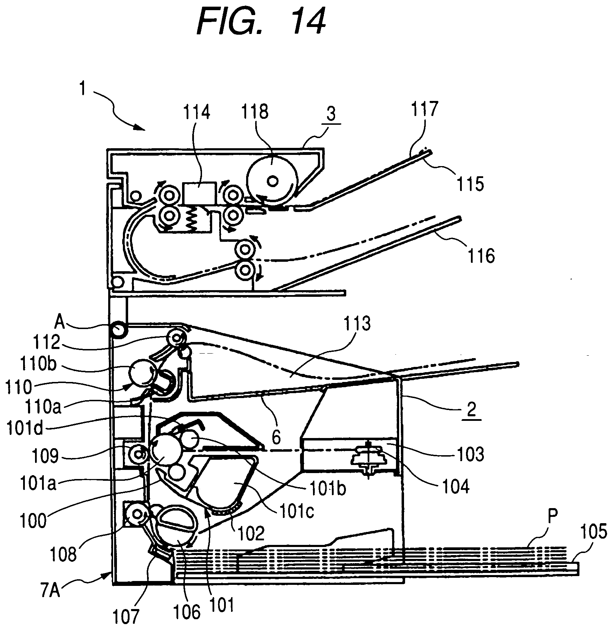

In the following, a fourth embodiment of the present invention will be explained. Fig. 14 is a schematic cross-sectional view of the image forming apparatus of the present embodiment. The functions are similar to those in the embodiment 1 but the scanner portion is different in its configuration. Therefore, components same or equivalent in function or configuration to those in the first embodiment are represented by same numbers and will not be explained further.

The image forming apparatus 1 of the present embodiment is provided, as an image reading portion (scanner portion) 3 and in place for the flat bed scanner in the first embodiment, with a scanner of automatic original feeding type having a contact image sensor 114 for optically reading an original image as an image pickup portion. The scanner portion 3 is provided with an original stacking tray 115 and an original discharge tray 116, respectively at the upstream and downstream sides of the contact image sensor 114.

Originals (sheet materials) 117 are set on the original stacking tray 115 with image-bearing surfaces upwards, and are conveyed one by one from an uppermost one by a pickup roller 118 to an original reading portion. The conveyed original 117 is subjected, by the contact image sensor 114, to a photoelectric reading of the image on the original, and the original 117 after image reading is discharged onto the original discharge tray 116 in the original reading apparatus, with the image-bearing surface downwards.

Between the scanner portion 3 and the printer portion 2, a lower link and an upper link are provided in a 4-articulation structure as in the first embodiment. The linkage of the open-closing operation of the scanner portion 3 and the door 6, the operation of the interlocking switch, the interception of the laser beam, the decoupling of the process cartridge and the releasing of the fixing pressure can be similar to those in the foregoing first embodiment and will not be explained in repetition.

Also as in the present embodiment in which the image forming apparatus 1 is provided with the scanner portion 3 of automatic original feeding type and is made somewhat larger in the scanner portion 3, the present invention allows to provide the recording material discharge portion 113 above the printer portion 2 thereby reducing the height of the apparatus as far as possible and to open the interior of the printer portion 2 by a simple operation as in the first embodiment thereby enabling trouble processing, cleaning or replacement of consumable (replacement) component such as a cartridge in the interior of the printer portion 2 in safe and easy manner.

In the foregoing embodiments, the consumable (replacement) component that is rendered replaceable by opening the door 6 of the printer portion 2 is assumed as a process cartridge, but the present invention is not limited to such embodiments. The invention is likewise applicable to a case where the developing device is singly constructed as a cartridge (development cartridge) mountable to or detachable from the main body of the image forming apparatus, or a developer container is singly constructed as a cartridge mountable to or detachable from the main body of the image forming apparatus.

According to the embodiments explained in the foregoing, in an image forming apparatus including an image forming portion and an image reading portion, a recording material discharge portion is provided between the image forming portion and the image reading portion provided thereabove to achieve an effective space utilization thereby reducing the footprint or the height of the apparatus, also to open the interior.of the image forming portion by a simple configuration and a simple operation, and to enable switching operations for stopping devices provided in the apparatus by a simple operation, thereby enabling trouble processing, cleaning or replacement of consumable (replaceable) component such as a cartridge in the interior of the printer portion in safe and easy manner.

The present invention has been explained by embodiments thereof, but the present invention is not limited thereto and is subject to any and all modifications within the scope of the appended claims.

## Claims

1. An image forming apparatus comprising:
an image forming portion (2) for forming an image;
an openable and closable member (6) for being opened and closed with respect to a main body of said image forming portion (2);
an image reading portion (3) for reading an image, wherein said image reading portion (3) is provided above said image forming portion (2), and said openable and closable member (6) is positioned at an upper side of said image forming portion (2);
a recording material discharge portion (113) to which a recording material is discharged, provided between said image reading portion (3) and said image forming portion (2);
wherein the recording material on which an image is formed in said image forming portion (2) is discharged to said recording material discharge portion (113), and the recording material discharged to said recording material discharge portion (113) is stacked on said openable and closable member (6);
wherein said image reading portion (3) is movable with respect to said image forming portion (2); and wherein
said openable and closable member (6) is movable toward said image reading portion (3),
**characterized in that**:
said openable and closable member (6) is operatively connected to the image reading portion (3) via a link means so that a movement of said image reading portion (3) causes a movement of said openable and closable member (6) and so that an opening angle of said openable and closable member (6) is larger than an opening angle of said image reading portion (3),
said image reading portion (3) and said openable and closable member (6) are capable of rotational movement, and that said image reading portion (3) and said openable and closable member (6) have a same rotary center (A).

2. An image forming apparatus according to claim 1, wherein said openable and closable member (6) is an external cover.

3. An image forming apparatus according to claim 1, further comprising image forming means detachably mountable to the main body of said image forming portion (2), wherein said image forming means is mountable or detachable by opening said openable and closable member (6).

4. An image forming apparatus according to claim 3, further comprising a process cartridge (101) containing said image forming means, wherein said process cartridge (101) is mountable or detachable by opening said openable and closable member (6).

5. An image forming apparatus according to claim 1, wherein said link means includes a first link member (4) movably connected to said image forming portion (2) and a second link member (5) movably connected to said image reading portion (3), and said first link member (4) and said second link member (5) are movably connected.

6. An image forming apparatus according to claim 1, further comprising switching means (11) for switching between a first state which is an operation enabled state and a second state which is an operation disabled state, wherein said switching means (11) switches said first state and said second state in response to the movement of said openable and closable member (6).

7. An image forming apparatus according to claim 6, wherein said switching means (11) switches a control portion for said image forming portion (2) and said image reading portion (3) to an operation state or a stopped state.

8. An image forming apparatus according to claim 6, further comprising light emitting means (103) for emitting a light and intercepting means (12) for being able to intercept the light emitted from said light emitting means (103), wherein said switching means (11) switches said intercepting means (12) to a state of not intercepting the light or a state of intercepting the light.

9. An image forming apparatus according to claim 6, further comprising fixing means for applying a pressure to a recording material, wherein said fixing means has a first pressure state and a second pressure state in which a pressure is smaller than said first pressure, and said switching means switches said fixing means to said first pressure state or to said second pressure state.

10. An image forming apparatus according to claim 6, further comprising an image bearing member (102), and drive transmitting means for transmitting a driving power to said image bearing member, wherein said switching means (11) switches said drive transmitting means to a state of transmitting the driving power or a state of not transmitting the driving power.

11. An image forming apparatus according to claim 1, wherein said image reading portion (3) has a projection portion (3d) to press said link means (4), wherein in a case where said image reading portion (3) moves toward said image forming portion (2), the projection portion (3d) of said image reading portion (3) presses said link means (4) so that said openable and closable member (6) is pressed.

## Patentansprüche

1. Bilderzeugungsvorrichtung mit:
einem Bilderzeugungsabschnitt (2) zum Erzeugen eines Bildes;
einem öffnungsfähigen und schließfähigen Element (6), das in Bezug auf einen Hauptkörper des Bilderzeugungsabschnittes (2) geöffnet und geschlossen wird;
einem Bildleseabschnitt (3) zum Lesen eines Bildes, wobei der Bildleseabschnitt (3) oberhalb des Bilderzeugungsabschnittes (2) vorgesehen ist, und das öffnungsfähige und schließfähige Element (6) an einer oberen Seite des Bilderzeugungsabschnittes (2) positioniert ist;
einem Aufzeichnungsmaterialabgabeabschnitt (113), zu dem ein Aufzeichnungsmaterial abgegeben wird und der zwischen dem Bildleseabschnitt (3) und dem Bilderzeugungsabschnitt (2) vorgesehen ist;
wobei das Aufzeichnungsmaterial, auf dem ein Bild in dem Bilderzeugungsabschnitt (2) erzeugt wird, zu dem Aufzeichnungsmaterialabgabeabschnitt (113) abgegeben wird, und das zu dem Aufzeichnungsmaterialabgabeabschnitt (113) abgegebene Aufzeichnungsmaterial an dem öffnungsfähigen und schließfähigen Element (6) gestapelt wird;
wobei der Bildleseabschnitt (3) in Bezug auf den Bilderzeugungsabschnitt (2) bewegbar ist; und wobei
das öffnungsfähige und schließfähige Element (6) zu dem Bildleseabschnitt (3) hin bewegbar ist,
**dadurch gekennzeichnet, dass:**
das öffnungsfähige und schließfähige Element (6) mit dem Bildleseabschnitt (3) über eine Verbindungseinrichtung so wirkverbunden ist, dass eine Bewegung des Bildleseabschnittes (3) eine Bewegung des öffnungsfähigen und schließfähigen Elementes (6) bewirkt, und dass ein Öffnungswinkel des öffnungsfähigen und schließfähigen Elementes (6) größer ist als ein Öffnungswinkel des Bildleseabschnittes (3),
der Bildleseabschnitt (3) und das öffnungsfähige und schließfähige Element (6) zu einer Drehbewegung in der Lage sind, und dass der Bildleseabschnitt (3) und das öffnungsfähige und schließfähige Element (6) eine gleiche Drehmitte (A) haben.

2. Bilderzeugungsvorrichtung gemäß Anspruch 1, wobei das öffnungsfähige und schließfähige Element (6) eine externe Abdeckung ist.

3. Bilderzeugungsvorrichtung gemäß Anspruch 1, die des Weiteren eine Bilderzeugungseinrichtung aufweist, die an dem Hauptkörper des Bilderzeugungsabschnittes (2) abnehmbar montierbar ist, wobei die Bilderzeugungseinrichtung durch Öffnen des öffnungsfähigen und schließfähigen Elementes (6) montierbar oder abnehmbar ist.

4. Bilderzeugungsvorrichtung gemäß Anspruch 3, die des Weiteren eine Prozesskartusche (101) aufweist, die die Bilderzeugungseinrichtung enthält, wobei die Prozesskartusche (101) durch Öffnen des öffnungsfähigen und schließfähigen Elementes (6) montierbar oder abnehmbar ist.

5. Bilderzeugungsvorrichtung gemäß Anspruch 1, wobei die Verbindungseinrichtung ein erstes Verbindungselement (4), das mit dem Bilderzeugungsabschnitt (2) beweglich verbunden ist, und ein zweites Verbindungselement (5) aufweist, das mit dem Bildleseabschnitt (3) beweglich verbunden ist, und wobei das erste Verbindungselement (4) und das zweite Verbindungselement (5) beweglich verbunden sind.

6. Bilderzeugungsvorrichtung gemäß Anspruch 1, die des Weiteren eine Schalteinrichtung (11) aufweist zum Schalten zwischen einem ersten Zustand, der ein den Betrieb ermöglichender Zustand ist, und einem zweiten Zustand, der ein den Betrieb außer Kraft setzender Zustand ist, wobei die Schalteinrichtung (11) den ersten Zustand und den zweiten Zustand im Ansprechen auf die Bewegung des öffnungsfähigen und schließfähigen Elementes (6) schaltet.

7. Bilderzeugungsvorrichtung gemäß Anspruch 6, wobei die Schalteinrichtung (11) einen Steuerabschnitt für den Bilderzeugungsabschnitt (2) und den Bildleseabschnitt (3) zu einem Betriebszustand oder einem angehaltenen Zustand schaltet.

8. Bilderzeugungsvorrichtung gemäß Anspruch 6, die des Weiteren eine Lichtemittiereinrichtung (103) zum Emittieren von Licht und eine Auffangeinrichtung (12) aufweist, die dazu in der Lage ist, das von der Lichtemittiereinrichtung (103) emittierte Licht aufzufangen, wobei die Schalteinrichtung (11) die Auffangeinrichtung (12) zu einem Zustand, bei dem sie Licht nicht auffängt, oder einem Zustand schaltet, bei dem sie Licht auffängt.

9. Bilderzeugungsvorrichtung gemäß Anspruch 6, die des Weiteren eine Fixiereinrichtung aufweist zum Aufbringen eines Drucks auf ein Aufzeichnungsmaterial, wobei die Fixiereinrichtung einen ersten Druckzustand und einen zweiten Druckzustand, bei dem ein Druck geringer als bei dem ersten Druck ist, aufweist, und die Schalteinrichtung die Fixiereinrichtung zu dem ersten Druckzustand oder zu dem zweiten Druckzustand schaltet.

10. Bilderzeugungsvorrichtung gemäß Anspruch 6, die des Weiteren ein Bildtrageelement (102) und eine Antriebsübertragungseinrichtung zum Übertragen einer Antriebskraft zu dem Bildtrageelement aufweist, wobei die Schalteinrichtung (11) die Antriebsübertragungseinrichtung zu einem Zustand, bei dem die Antriebskraft übertragen wird, oder zu einem Zustand schaltet, bei dem die Antriebskraft nicht übertragen wird.

11. Bilderzeugungsvorrichtung gemäß Anspruch 1, wobei der Bildleseabschnitt (3) einen Vorsprungsabschnitt (3d) zum Drücken der Verbindungseinrichtung (4) hat, wobei in dem Fall, bei dem der Bildleseabschnitt (3) sich zu dem Bilderzeugungsabschnitt (2) hin bewegt, der Vorsprungsabschnitt (3d) des Bildleseabschnittes (3) die Verbindungseinrichtung (4) so drückt, dass das öffnungsfähige und schließfähige Element (6) gedrückt wird.

## Revendications

1. Appareil de formation d'image, comprenant :
une partie de formation d'image (2) destinée à former une image ;
un élément pouvant être ouvert et fermé (6) destiné à être ouvert et fermé par rapport à un corps principal de ladite partie de formation d'image (2) ;
une partie de lecture d'image (3) destinée à lire une image, ladite partie de lecture d'image (3) étant disposée au-dessus de ladite partie de formation d'image (2), et ledit élément pouvant être ouvert et fermé (6) étant placé au niveau d'un côté supérieur de ladite partie de formation d'image (2) ;
une partie de décharge de matériau d'enregistrement (113) sur laquelle est déchargé un matériau d'enregistrement, disposée entre ladite partie de lecture d'image (3) et ladite partie de formation d'image (2) ;
dans lequel le matériau d'enregistrement sur lequel est formée une image dans ladite partie de formation d'image (2) est déchargé vers ladite partie de décharge de matériau d'enregistrement (113), et le matériau d'enregistrement déchargé vers ladite partie de décharge de matériau d'enregistrement (113) est empilé sur ledit élément pouvant être ouvert et fermé (6) ;
dans lequel ladite partie de lecture d'image (3) est mobile par rapport à ladite partie de formation d'image (2) ; et
dans lequel ledit élément pouvant être ouvert et fermé (6) est mobile en direction de ladite partie de lecture d'image (3),
**caractérisé en ce que** :
ledit élément pouvant être ouvert et fermé (6) est relié de manière fonctionnelle à la partie de lecture d'image (3) par le biais d'un moyen de liaison de sorte qu'un déplacement de ladite partie de lecture d'image (3) provoque un déplacement dudit élément pouvant être ouvert et fermé (6) et de sorte qu'un angle d'ouverture dudit élément pouvant être ouvert et fermé (6) soit plus grand qu'un angle d'ouverture de ladite partie de lecture d'image (3),
ladite partie de lecture d'image (3) et ledit élément pouvant être ouvert et fermé (6) peuvent faire l'objet d'un mouvement de rotation, et **en ce que** ladite partie de lecture d'image (3) et ledit élément pouvant être ouvert et fermé (6) ont le même centre de rotation (A).

2. Appareil de formation d'image selon la revendication 1, dans lequel ledit élément pouvant être ouvert et fermé (6) est un couvercle extérieur.

3. Appareil de formation d'image selon la revendication 1, comprenant en outre un moyen de formation d'image pouvant être monté de manière démontable sur le corps principal de ladite partie de formation d'image (2), dans lequel ledit moyen de formation d'image peut être monté ou démonté par ouverture dudit élément pouvant être ouvert et fermé (6).

4. Appareil de formation d'image selon la revendication 3, comprenant en outre une cartouche de traitement (101) contenant ledit moyen de formation d'image, dans lequel ladite cartouche de traitement (101) peut être montée ou démontée par ouverture dudit élément pouvant être ouvert et fermé (6).

5. Appareil de formation d'image selon la revendication 1, dans lequel ledit moyen de liaison comprend un premier élément de liaison (4) relié de manière mobile à ladite partie de formation d'image (2) et un second élément de liaison (5) relié de manière mobile à ladite partie de lecture d'image (3), et ledit premier élément de liaison (4) et ledit second élément de liaison (5) sont reliés de manière mobile.

6. Appareil de formation d'image selon la revendication 1, comprenant en outre un moyen de commutation (11) destiné à assurer une commutation entre un premier état qui est un état de fonctionnement activé et un second état qui est un état de fonctionnement désactivé, dans lequel ledit moyen de commutation (11) assure une commutation entre ledit premier état et ledit second état en réponse au déplacement dudit élément pouvant être ouvert et fermé (6).

7. Appareil de formation d'image selon la revendication 6, dans lequel ledit moyen de commutation (11) assure une commutation d'une partie de commande de ladite partie de formation d'image (2) et de ladite partie de lecture d'image (3) dans un état de fonctionnement ou dans un état arrêté.

8. Appareil de formation d'image selon la revendication 6, comprenant en outre un moyen d'émission de lumière (103) destiné à émettre une lumière, et un moyen d'interception (12) pouvant intercepter la lumière émise par ledit moyen d'émission de lumière (103), dans lequel ledit moyen de commutation (11) assure une commutation dudit moyen d'interception (12) dans un état dans lequel il n'intercepte pas la lumière ou dans un état dans lequel il intercepte la lumière.

9. Appareil de formation d'image selon la revendication 6, comprenant en outre un moyen de fixation destiné à appliquer une pression à un matériau d'enregistrement, dans lequel ledit moyen de fixation a un premier état de pression et un second état de pression dans lequel une pression est inférieure à ladite première pression, et ledit moyen de commutation assure une commutation dudit moyen de fixation dans ledit premier état de pression ou dans ledit second état de pression.

10. Appareil de formation d'image selon la revendication 6, comprenant en outre un élément porteur d'image (102), et un moyen de transmission d'entraînement destiné à transmettre une puissance d'entraînement audit élément porteur d'image, dans lequel ledit moyen de commutation (11) assure une commutation dudit moyen de transmission d'entraînement dans un état dans lequel il transmet la puissance d'entraînement ou dans un état dans lequel il ne transmet pas la puissance d'entraînement.

11. Appareil de formation d'image selon la revendication 1, dans lequel ladite partie de lecture d'image (3) comporte une partie en saillie (3d) servant à appuyer sur ledit moyen de liaison (4), dans lequel, dans un cas où ladite partie de lecture d'image (3) se déplace en direction de ladite partie de formation d'image (2), la partie en saillie (3d) de ladite partie de lecture d'image (3) appuie sur ledit moyen de liaison (4) de façon à appuyer sur ledit élément pouvant être ouvert et fermé (6).
